# EUROPEAN PATENT SPECIFICATION

(11) **EP 2 816 303 B1**
(45) Date of publication and mention of the grant of the patent: **08.03.2017**
(21) Application number: 14170680.4
(22) Date of filing: 30.05.2014
(51) Int. Cl.: F25D 23/12

(54) **Refrigerator**
Kühlschrank
Réfrigérateur

(30) Priority: 17.06.2013 KR 20130068945
(43) Date of publication of application: 24.12.2014
(73) Proprietor: Samsung Electronics Co., Ltd, Gyeonggi-do 16677 (KR)
(72) Inventor: Lee, Sang Hoon, Gyeonggi-do (KR); Joo, Seung Ah, Gyeonggi-do (KR); Kim, Jeong Myeong, Seoul (KR); Cho, Han Wook, Gyeonggi-do (KR)
(74) Representative: Walaski, Jan Filip

(56) References cited:
- WO-A1-03/099732
- WO-A1-2007/073822
- DE-A1- 4 422 709
- US-A1- 2011 067 433

## Description

The present invention relates to a refrigerator having a water filter cartridge for maintaining a constant flow rate.

A refrigerator is generally provided with a device that is connected to a water supply source or equipped therein with a water storage vessel so as to supply drinkable water or make ice.

The water supply device for refrigerators is provided with a water filter to filter out foreign substances contained in water.

The water filter is equipped with a water filter cartridge to filter out foreign substances contained in water.

The water filter cartridge purifies poured water when the water is passed through the filter by gravity. The water filter cartridge is filled with active carbon and ion exchange resin and inserted in a housing fitting the water filter cartridge. Thereby, water poured into the housing is purified as it is discharged downward.

However, in the case of this gravity-type water filter cartridge, increase in area of the discharge port at the lower portion of a discharge structure, through which water is discharged, may increase flow rate, may prevent the water filter cartridge from exhibiting a certain performance, and decrease in area of the discharge port may cause the internal filler to be pressed and stuck, resulting in drastic decrease in flow rate and clogging.

Therefore, it is an aspect of the present invention to provide a water filter cartridge that may control the discharge flow rate of the water filter cartridge to be constant and a refrigerator having the same.

It is another aspect of the present invention to provide a water filter cartridge having an improved discharge structure that may suppress clogging of a water filter by an internal filler, and a refrigerator having the same.

WO03/099732, WO2007/073822, US2011/067433 and DE4422709 describe various types of water filter assembly.

Additional aspects of the invention will be set forth in part in the description which follows and, in part, will be obvious from the description, or may be learned by practice of the invention.

In accordance with one aspect of the present invention, there is provided a refrigerator according to claim 1.

The width of the second slit defining member is greater than the width of the first
slit defining member.

The second slit defining member may have an area 1.1 to 3 times an area of the first slit defining member.

The first slit defining member and the second slit defining member is formed in a
bar shape.

The first slit defining member and the second slit defining member is disposed
orthogonal to each other.

An upper surface of the second slit defining member may be provided with a contact surface to contact the ion exchange resin in the case.

In accordance with other described aspects, a water filter cartridge includes at least one introduction port positioned at an upper portion of a case to allow water to be introduced therethrough, the case forming an external appearance of the water filter cartridge and being filled with an ion exchange resin, at least one discharge port positioned at a lower portion of the case to allow the water having passed through the ion exchange resin to be discharged therethrough, and a flow rate control unit provided to the discharge port to control a discharge flow rate of the water, wherein the flow rate control unit includes a first slit defining member formed in a bar shape to define a first slit at the discharge port, and a second slit defining member formed in a bar shape to define a second slit and disposed orthogonal to the first slit defining member at an upper side of the first slit defining member to create a mesh shape, wherein a width of the first slit differs from a width of the second slit.

The second slit defining member may have an area 1.1 to 3 times an area of the first slit defining member.

A width of the second slit defining member may be greater than a width of the first slit defining member.

The case may be provided with a plurality of introduction ports of the at least one introduction port and a plurality of discharge ports of the at least one discharge port.

The second slit defining member may include a contact surface adapted to contact the ion exchange resin in the case.

The first slit defining member may be disposed on a bottom surface of the second slit defining member in order not to contact the ion exchange resin in the case.

In accordance with other described aspects, a refrigerator includes a body provided with a storage compartment, a door provided to a front of the body, and a water filter cartridge installed in the door, wherein the water filter cartridge includes a case filled with an ion exchange resin, an introduction port positioned at an upper portion of the case to allow water to be introduced therethrough, and a discharge port positioned at a lower portion of the case to allow the water having passed through the ion exchange resin to be discharged therethrough, wherein the discharge port includes a first slit defining member to define a first slit on a bottom surface of the case to allow the water introduced through the introduction port to be discharged through the first slit, and a second slit defining member disposed at an upper side of the first slit defining member to define a second slit, wherein a width of the first slit defining member differs from a width of the second slit defining member.

The width of the second slit defining member may be greater than the width of the first slit defining member.

The second slit defining member may have an area 1.1 to 3 times an area of the first slit defining member.

The first slit defining member and the second slit defining member may be formed in a bar shape.

The first slit defining member and the second slit defining member may be disposed orthogonal to each other.

An upper surface of the second slit defining member may be provided with a contact surface to contact the ion exchange resin in the case.

The water filter cartridge may further include a fixing unit adapted to be fixed to the door, and a water tank connected to the fixing unit and adapted to store water purified by passing through the water filter cartridge.

These and/or other aspects of the invention will become apparent and more readily appreciated from the following description of the embodiments, taken in conjunction with the accompanying drawings in which:
FIG. 1 is a perspective view schematically illustrating a refrigerator equipped with a water filter cartridge according to an exemplary embodiment of the present invention is installed;
FIG. 2 is a perspective view schematically illustrating a water filter cartridge according to one embodiment;
FIG. 3 is a cross-sectional view taken along line A-A' of FIG. 2;
FIG. 4 is a top view schematically illustrating the lower portion of the interior of the water filter cartridge according to one embodiment;
FIG. 5 is a bottom view schematically illustrating the lower portion of the exterior of the water filter cartridge according to one embodiment;
FIG. 6 is an enlarged view illustrating section B of FIG. 3; and
FIG. 7 is a view schematically illustrating a flow rate of a stream discharged through a flow rate control unit of a water filter cartridge according to one embodiment of the present invention.

Reference will now be made in detail to the embodiments of the present invention, examples of which are illustrated in the accompanying drawings, wherein like reference numerals refer to like elements throughout.

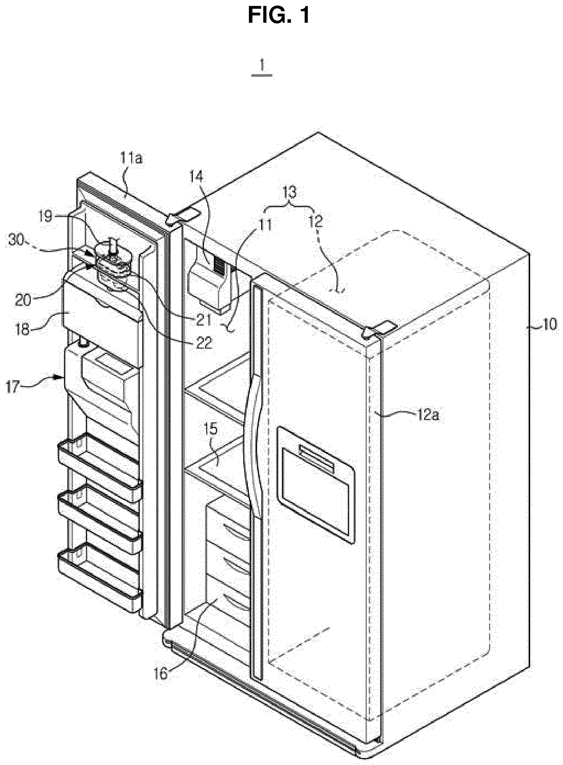

FIG. 1 is a perspective view schematically illustrating a refrigerator equipped with a water filter cartridge according to an exemplary embodiment of the present invention is installed.

As shown in FIG. 1, a refrigerator 1 may include a body 10 forming an external appearance of the refrigerator 1 and provided with a storage compartment 13, a chilled air supply unit to supply chilled air to the storage compartment 13, and doors 11a and 12a to open and close the storage compartment 13.

The storage compartment 13 may be partitioned into a freezer compartment 11 on the left side and a fresh food compartment 12 on the right side by a vertical partition wall. The freezer compartment 11 may be opened and closed by a freezer compartment door 11a, and the fresh food compartment 12 may be opened and closed by a fresh food compartment door 12a.

The freezer compartment door 11a and the fresh food compartment door 12a are rotatably coupled to both sides of the body 10 to open and close the freezer compartment 11 and the fresh food compartment 12.

Each of the freezer compartment 11 and the fresh food compartment 12 may be provided with a plurality of shelves 15, which may be disposed spaced apart from each other, and a storage drawer 16 defining a closed space to minimize evaporation of moisture.

An icemaker 14 to make ice may be provided to one side of the upper portion of the freezer compartment 11, and a dispenser 17 to discharge ice or cooled water produced in the icemaker 14 may be provided to the freezer compartment door 11a.

Installed at the body 10 and the freezer compartment door 11a is a water supply pipe 19 through which water is supplied from an external water source (not shown) to the dispenser 17. In addition, a water supply valve (not shown) to control water supply, a water tank 18 to store supplied water, and a water filter cartridge 30 to purify the supplied water may be installed in the water supply path.
The water supply pipe 19 is embedded in the body 10 and the freezer compartment door 11a, and a portion thereof is connected to the water filter cartridge 30 such that supplied water is purified and provided.

The water filter cartridge 30 is installed at the inner side of the freezer compartment door 11a, and a fixing unit 20 is provided to the freezer compartment door 11a to allow installation of the water filter cartridge 30. The fixing unit 20 may be disposed between the water supply pipe 19 and the water tank 18 of the dispenser 17.

While the water filter cartridge 30 is illustrated as being installed at the inner side of the freezer compartment door 11a in this embodiment, embodiments of the present invention are not limited thereto. For example, the water filter cartridge 30 may be installed on the rear surface of the body 10 or in the fresh food compartment.

The fixing unit 20 may include a first fixing unit 21 having a connection port 23 formed at the upper side thereof to allow the water supply pipe 19 to be connected to the connection port 23, and a second fixing unit 22 whose lower side is connected to the water tank 18.

The water filter cartridge 30 may be manually removed from the fixing unit 20 of the freezer compartment door 11a by a user.

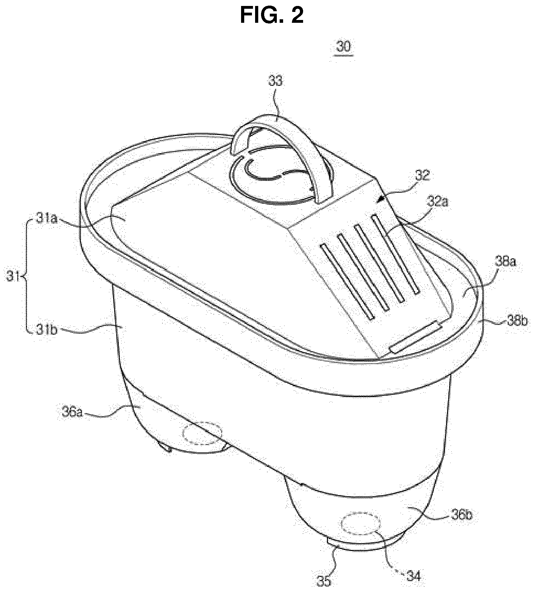

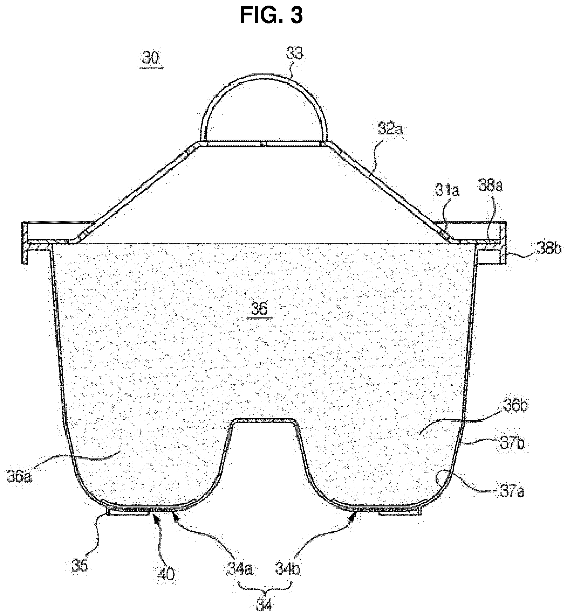

FIG. 2 is a perspective view schematically illustrating a water filter cartridge according to one embodiment and FIG. 3 is a cross-sectional view taken along line A-A' of FIG. 2.

As shown in FIGS. 2 and 3, the water filter cartridge 30 includes a case 31 adapted to be filled with active carbon and ion exchange resin.

The case 31 of the water filter cartridge 30 may include a first case 31a arranged at the upper side and provided with an introduction portion 32 and a second case 31b arranged at the lower side and provided with a discharge port 34.

The second case 31b may be provided with an accommodation portion 36 to be filled with active carbon and ion exchange resin, and the first case 31a may be fitted into the upper end of the second case 31b.

To this end, a first coupling portion 38a is formed at the lower end of the first case 31a, and a second coupling portion 38b may be formed at the upper end of the second case 31b to correspond to the first coupling portion 38a.

A grip 33 protruding upward is provided to the outer upper end of the first case 31a, allowing the water filter cartridge 30 to be easily separated and removed from the fixing unit 20 of the freezer compartment door 11a.

Accordingly, the user may easily replace the active carbon and ion exchange resin in the water filter cartridge 30 through the grip 33.

Both sides of the first case 31a are inclined downward, and the introduction portion 32 is formed on the upper surface of the first case 31a to allow water supplied through the water supply pipe 19 to be introduced into the first case 31a.

The introduction portion 32 may include at least one introduction port 32a.

The introduction ports 32a may be symmetrically disposed on both sides of the upper surface of the first case 31a.

The accommodation portion 36 of the second case 31b may include a first accommodation portion 36a arranged at one side of the second case 31b and a second accommodation portion 36b arranged at the opposite side of the second case 31b.

Herein, the first accommodation portion 36a and the second accommodation portion 36b communicate with each other at the upper sides thereof.

The discharge port 34 is formed on the bottom surfaces of the first accommodation portion 36a and the second accommodation portion 36b.

The discharge port 34 may include a first discharge port 34a formed on the bottom surface of the first accommodation portion 36a and a second discharge port 34b formed on the bottom surface of the second accommodation portion 36b.

In this embodiment, the accommodation portion 36 of the second case 31b has two portions. However, embodiments of the present invention are not limited thereto. For example, three or more accommodation portions may be formed, and the number of discharge ports may also change in accordance therewith.

A semicircular guide 35 may be formed at the lower end of an outer surface 37b of the second case 31b to guide water discharged through the discharge port 34.

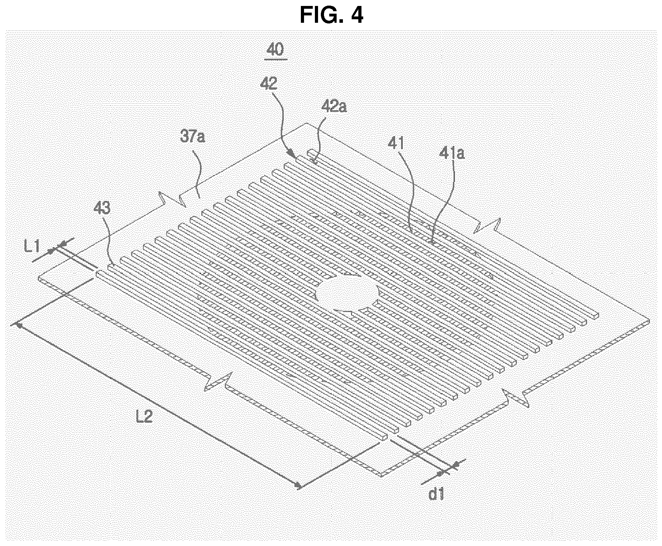

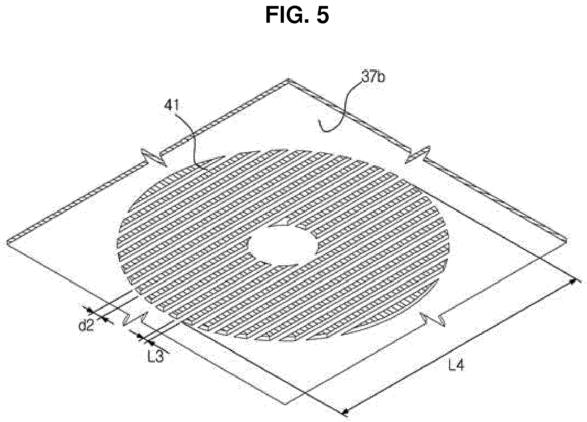

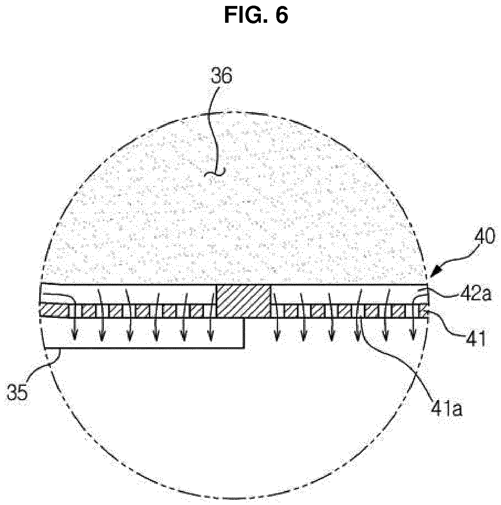

FIG. 4 is a top view schematically illustrating the lower portion of the interior of the water filter cartridge according to one embodiment, and FIG. 5 is a bottom view schematically illustrating the lower portion of the exterior of a water filter cartridge according to one embodiment. FIG. 6 is an enlarged view illustrating section B of FIG. 3.

As shown in FIGS. 4 to 6, the discharge port 34 allows water introduced from the introduction portion 32 of the first case 31a to be discharged from the case 31 therethrough after passing through active carbon and ion exchange resin inside the first accommodation portion 36a and the second accommodation portion 36b.

The discharge port 34 is provided with a flow rate control unit 40 to keep the flow rate of discharged water constant.

The flow rate control unit 40 includes a first slit defining member 41 defining first slits 41a and a second slit defining member 42 disposed at the upper side of the first slit defining member 41 and defining second slits 42a.

The first slit defining member 41 defining the first slits 41a may be integrally formed on the bottom surface of the second case 31b.

The second slit defining member 42 may be formed on the inner surface 37a of the second case 31b. In this embodiment, the first slit defining member 41 is integrally formed on the bottom surface of the second case 31b, and the second slit defining member 42 is formed on the inner surface 37a of the second case 31b in a protruding manner. However, embodiments of the present invention are not limited thereto. For example, the second slit defining member may be integrated with the second case, and the first slit defining member may be formed at the exterior of the second case.
The first slit defining member 41 and the second slit defining member 42 may be formed in the shape of a bar having a predetermined thickness and a predetermined width.

The second slit defining member 42 defining the second slits 42a is disposed on the upper side of the first slit defining member 41 to be orthogonal to the first slit defining member 41. Thereby, the first slits 41a and the second slits 42a create a mesh shape.

The first slit defining member 41 and the second slit defining member 42 have different widths. Herein, the width L3 of the first slit defining member 41 may be less than the width L1 of the second slit defining member 42.

Accordingly, the area of the second slit defining member 42 may be greater than that of the first slit defining member 41.

For example, when the length L2 of the second slit defining member 42 is equal to the length L4 of the first slit defining member 41 (L2=L4), the area of the second slit defining member 42 may be L1xL2, and the area of the first slit defining member 41 may be L3xL4. Since the width L1 of the second slit defining member 42 is greater than the width L1 of the first slit defining member 41 (L1>L3), the second slit defining member 42 may have a greater area than the first slit defining member 41.

Herein, the area of the second slit defining member 42 may be 1.1 to 3 times the area of the first slit defining member 41.

In addition, a contact surface 43 having a greater area than the first slit defining member 41 is formed on the upper surface of the second slit defining member 42. The contact surface 43 of the second slit defining member 42 is supported by contacting an ion exchange resin. Thereby, the ion exchange resin is prevented from being introduced into the first slits 41a of the first slit defining member 41.

In the case that the second slit defining member 42 has a greater area than the first slit defining member 41 as described above, the water introduced through the introduction port 32a of the case 31 is purified by moving along the second slits 42a of the second slit defining member 42 and then discharged from the case 31 through the second slits 42a of the first slit defining member 41.

At this time, the purified water is discharged through the first slits 41a without resistance from the ion exchange resin contacting the contact surface 43 of the second slit defining member 42.

In addition, by adjusting the area of the first slits 41a of the first slit defining member 41, the flow rate may be kept constant.

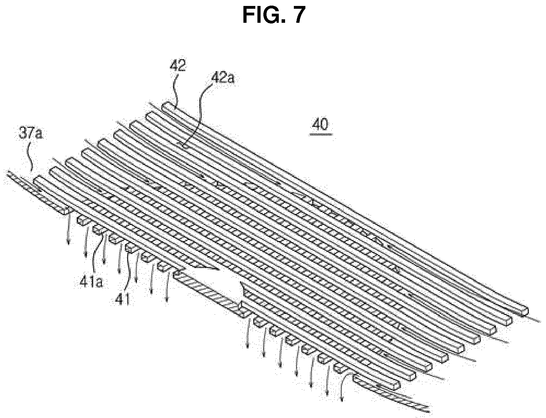

FIG. 7 is a view schematically illustrating a flow rate of a stream discharged through a flow rate control unit of a water filter cartridge according to one embodiment of the present invention.

As shown in FIG. 7, the water introduced through the introduction portion 32 of the first case 31a of the water filter cartridge 30 passes through the active carbon and ion exchange resin accommodated in the accommodation portion 36 of the second case 31b and flows to the discharge port 34 provided on the bottom surface of the second case 31b.

Then, the water flows along the second slits 42a of the second slit defining member 42 of the flow rate control unit 40 provided to the discharge port 34 and is discharged from the case 31 through the first slits 41a disposed orthogonal to the second slit 42a.

The second slit defining member 42 contacts and supports the ion exchange resin accommodated in the second case 31b through the contact surface 43, while the first slit defining member 41, which is disposed on the bottom surface of the second slit defining member 42, does not contact the ion exchange resin.

Accordingly, the first slits 41a are not clogged when contacting the internal filler. Therefore, the discharge flow rate of water may be kept constant.

The purified water discharged through the first slits 41a may be stored in the water tank 18 and obtained through the dispenser 17 when the user desires to obtain purified water.

As is apparent from the above description, the discharge flow rate in a water filter cartridge according to an embodiment of the present invention may be kept constant. Accordingly, performance of a water filter may be improved.

In addition, clogging of a water filter by an internal filler may be suppressed by improvement of the discharge structure of the water filter cartridge. Therefore, durability may be enhanced.

Although a few embodiments of the present invention have been shown and described, it would be appreciated by those skilled in the art that changes may be made in these embodiments without departing from the principles of the invention, the scope of which is defined in the claims.

## Claims

1. A refrigerator (1) comprising:
a body (10) provided with a storage compartment (13);
a door (11a, 12a) provided to a front of the body; and
a water filter cartridge (30) installed in the door,
wherein the water filter cartridge comprises:
a case (31) filled with an ion exchange resin;
an introduction port (32a) positioned at an upper portion of the case (31) to allow water to be introduced therethrough; and
a discharge port (34) positioned at a lower portion of the case to allow the water having passed through the ion exchange resin to be discharged therethrough,
**characterized in that** the discharge port (34) comprises:
a first slit defining member (41) to define first slits (41a) on a bottom surface of the case to allow the water introduced through the introduction port to be discharged through the first slits (41a); and
a second slit defining member (42) disposed at an upper side of the first slit defining member (41) to define second slits (42a) which create a mesh shape with the first slits (41a),
wherein a width of the first slit defining member (41) differs from a width of the second slit defining member (42);
wherein the width of the second slit defining member (42) is greater than the width of the first slit defining member (41),
wherein the first slit defining member (41) and the second slit defining member (42) are formed in a bar shape,
the first slit defining member (41) and the second slit defining member (42) are disposed orthogonal to each other.

2. The refrigerator according to claim 1, wherein the second slit defining member (42) has an area 1.1 to 3 times an area of the first slit defining member (41).

3. The refrigerator according to claim 1, wherein an upper surface of the second slit defining member (42) is provided with a contact surface (43) to contact the ion exchange resin in the case.

4. The refrigerator according to claim 1, wherein the water filter cartridge (30) further comprises:
a fixing unit (20) adapted to be fixed to the door; and
a water tank (18) connected to the fixing unit and adapted to store water purified by passing through the water filter cartridge.

5. The refrigerator according to claim 1, wherein the introduction port (32a) comprises at least one introduction port and the discharge port (34) comprises at least one discharge port.

6. The refrigerator according to claim 1, wherein the first slit defining member (41) is disposed on a bottom surface of the second slit defining member (42) in order not to contact the ion exchange resin in the case.

## Patentansprüche

1. Kühlschrank (1), der Folgendes umfasst:
einen Körper (10), der mit einem Aufbewahrungsfach (13) versehen ist;
eine Tür (11a, 12a), die an einer Vorderseite des Körpers bereitgestellt wird; und
eine Wasserfilterpatrone (30), die in der Tür installiert ist,
wobei die Wasserfilterpatrone Folgendes umfasst:
ein Gehäuse (31), das mit einem Ionenaustauschharz gefüllt ist;
eine Einlassöffnung (32a), die an einem oberen Abschnitt des Gehäuses (31) positioniert ist, um zuzulassen, dass Wasser dadurch hindurch eingelassen wird; und
eine Auslassöffnung (34), die an einem unteren Abschnitt des Gehäuses positioniert ist, um zuzulassen, dass das durch das Ionenaustauschharz gelaufene Wasser dadurch hindurch ausgelassen wird,
**dadurch gekennzeichnet, dass** die Auslassöffnung (34) Folgendes umfasst:
einen erstes Schlitze definierendes Element (41), um erste Schlitze (41a) an einer unteren Oberfläche des Gehäuses zu definieren, um zuzulassen, dass das durch die Einlassöffnung eingelassene Wasser durch die ersten Schlitze (41a) ausgelassen wird; und
eine zweites Schlitze definierendes Element (42), das an einer Oberseite des ersten Schlitze definierenden Elements (41) angeordnet ist, um zweite Schlitze (42a) zu definieren, die mit den ersten Schlitzen (41a) eine Gitterform erzeugen,
wobei eine Breite des ersten Schlitze definierenden Elements (41) von einer Breite des zweiten Schlitze definierenden Elements (42) verschieden ist;
wobei die Breite des zweiten Schlitze definierenden Elements (42) größer ist als die Breite des ersten Schlitze definierenden Elements (41),
wobei das erste Schlitze definierende Element (41) und das zweite Schlitze definierende Element (42) in einer Balkenform gebildet sind,
wobei das erste Schlitze definierende Element (41) und das zweite Schlitze definierende Element (42) rechtwinklig zueinander angeordnet sind.

2. Kühlschrank nach Anspruch 1, wobei das zweite Schlitze definierende Element (42) eine Fläche aufweist, die das 1,1- bis 3-fache einer Fläche des ersten Schlitze definierenden Elements (41) beträgt.

3. Kühlschrank nach Anspruch 1, wobei eine obere Oberfläche des zweiten Schlitze definierenden Elements (42) mit einer Kontaktoberfläche (43) versehen ist, um sich mit dem Ionenaustauschharz in dem Gehäuse in Kontakt zu befinden.

4. Kühlschrank nach Anspruch 1, wobei die Wasserfilterpatrone (30) weiter Folgendes umfasst:
eine Befestigungseinheit (20), die dazu angepasst ist, an der Tür befestigt zu werden; und
einen Wasserbehälter (18), der mit der Befestigungseinheit verbunden ist und dazu angepasst ist, durch Laufen durch die Wasserfilterpatrone gereinigtes Wasser aufzubewahren.

5. Kühlschrank nach Anspruch 1, wobei die Einlassöffnung (32a) mindestens eine Einlassöffnung umfasst und die Auslassöffnung (34) mindestens eine Auslassöffnung umfasst.

6. Kühlschrank nach Anspruch 1, wobei das erste Schlitze definierende Element (41) an einer unteren Oberfläche des zweiten Schlitze definierenden Elements (42) angeordnet ist, um sich nicht mit dem Ionenaustauschharz in dem Gehäuse in Kontakt zu befinden.

## Revendications

1. Réfrigérateur (1) comportant :
un corps (10) comportant un compartiment de stockage (13) ;
une porte (11a, 12a) mise en oeuvre sur une partie avant du corps ; et
une cartouche de filtre à eau (30) installée dans la porte,
dans lequel la cartouche de filtre à eau comporte :
un boîtier (31) rempli d'une résine échangeuse d'ions ;
un orifice d'introduction (32a) positionné au niveau d'une partie supérieure du boîtier (31) permettant à l'eau d'être introduite au travers de celui-ci ; et
un orifice de décharge (34) positionné au niveau d'une partie inférieure du boîtier permettant à l'eau ayant traversé la résine échangeuse d'ions d'être déchargée au travers de celui-ci,
**caractérisé en ce que** l'orifice de décharge (34) comporte :
un premier élément définissant des fentes (41) servant à définir des premières fentes (41a) sur une surface inférieure du boîtier permettant à l'eau introduite au travers de l'orifice d'introduction d'être déchargée au travers des premières fentes (41a) ; et
un deuxième élément définissant des fentes (42) disposé au niveau d'un côté supérieur du premier élément définissant des fentes (41) servant à définir des deuxièmes fentes (42a) qui créent une forme de maille avec les premières fentes (41a),
dans lequel une largeur du premier élément définissant des fentes (41) diffère d'une largeur du deuxième élément définissant des fentes (42) ;
dans lequel la largeur du deuxième élément définissant des fentes (42) est supérieure par rapport à la largeur du premier élément définissant des fentes (41),
dans lequel le premier élément définissant des fentes (41) et le deuxième élément définissant des fentes (42) sont formés en une forme de barre,
le premier élément définissant des fentes (41) et le deuxième élément définissant des fentes (42) sont disposés de manière orthogonale l'un par rapport à l'autre.

2. Réfrigérateur selon la revendication 1, dans lequel le deuxième élément définissant des fentes (42) a une surface mesurant de 1,1 à 3 fois une surface du premier élément définissant des fentes (41).

3. Réfrigérateur selon la revendication 1, dans lequel une surface supérieure du deuxième élément définissant des fentes (42) comporte une surface de contact (43) à des fins de contact avec la résine échangeuse d'ions dans le boîtier.

4. Réfrigérateur selon la revendication 1, dans lequel la cartouche de filtre à eau (30) comporte par ailleurs :
une unité de fixation (20) adaptée à des fins de fixation sur la porte ; et
un réservoir d'eau (18) raccordé à l'unité de fixation et adapté à des fins de stockage d'eau purifiée par le passage au travers de la cartouche de filtre à eau.

5. Réfrigérateur selon la revendication 1, dans lequel l'orifice d'introduction (32a) comporte au moins un orifice d'introduction et l'orifice de décharge (34) comporte au moins un orifice de décharge.

6. Réfrigérateur selon la revendication 1, dans lequel le premier élément définissant des fentes (41) est disposé sur une surface inférieure du deuxième élément définissant des fentes (42) afin de ne pas entrer en contact avec la résine échangeuse d'ions dans le boîtier.
